# EUROPEAN PATENT SPECIFICATION

(11) **EP 4 271 578 B1**
(45) Date of publication and mention of the grant of the patent: **29.01.2025**
(21) Application number: 21845111.0
(22) Date of filing: 29.12.2021
(51) Int. Cl.: B60C 17/06, B60C 7/10, B60C 7/12

(54) **MODULE IN EXPANDED ELASTOMERIC MATERIAL FOR FILLING A TIRE OF A CYCLE OR MOTORCYCLE**
MODUL AUS EXPANDIERTEM ELASTOMERMATERIAL ZUM FÜLLEN EINES REIFENS EINES FAHRRADS ODER MOTORRADS
MODULE EN MATÉRIAU ÉLASTOMÈRE EN EXPANSION POUR REMPLIR UN PNEUMATIQUE D'UNE BICYCLETTE OU D'UNE MOTOCYCLETTE

(30) Priority: 29.12.2020 IT 202000032705
(43) Date of publication of application: 08.11.2023
(73) Proprietor: MrWolf S.r.l., 25121 Brescia (IT)
(72) Inventor: INTERNÒ, Tiziano, 25121 Brescia (IT)
(74) Representative: Autuori & Partners S.R.L.
(86) International application number: PCT/IB2021/062419
(87) International publication number: WO 2022/144795

(56) References cited:
- EP-A1- 3 566 886
- WO-A1-91/10705
- WO-A2-2006/076783
- WO-A2-2007/139772
- DE-A1- 2 854 090
- US-A1- 2019 054 778

## Description

### Technical field

The present invention generally relates to the technical field of accessories for cycles and motorcycles, and it particularly relates to an annular modular assembly for filling a tyre of a cycle or motorcycle.

The invention also relates to the use of such assembly for filling a tyre of a cycle or motorcycle, a kit and a wheel which include such assembly.

### State of the Art

It is known that in motorcycling or cycling sports, both competitive and amateur, on rough or in any case non-asphalted terrains it is advisable to fill the inside of the tyres of the cycle or motorcycle using a filling element.

This increases the protection of the tyre against punctures and pinching compared, for example, to conventional air chambers. On the other hand, the filling element enhances the performance of the tyre in terms of damping against impacts, raises the grip of the tyre on different types of terrain and, more generally, it improves the comfort and riding feeling for the rider.

Various types of filling elements are available on the market. In particular, a toroidal ring made of foamed elastomeric material, for example butyl or EVA, which fills the entire section of the tyre is known.

The main drawbacks of this known filling element are the complex assembly in the tyre, a poor versatility of use and a limited duration over time.

Furthermore, this known filling element is expensive in case of damage or breakage.

From US2019/054778 an annular modular assembly is known having all the features of the preamble of claim 1.

### Summary of the invention

An object of the present invention is to at least partly overcome the drawbacks illustrated above by providing a module for filling a tyre of a cycle or motorcycle that is highly efficient and cost-effective.

Another object of the present invention is to provide a filling module which that is easy and quick to fit into the tyre of any cycle or motorcycle.

Another object of the present invention is to provide a filling module which allows to adapt the elastic response of the tyre of a cycle or motorcycle depending on the needs of the user.

Another object of the present invention is to provide a long-life module for filling a tyre of a cycle or motorcycle.

Another object of the present invention is to provide a module for filling a tyre of a cycle or motorcycle which is highly versatile in terms of adaptability to different types of tyres and/or rims.

These and other objects which will be more apparent hereinafter, are attained by an annular modular assembly for filling a tyre of a cycle or motorcycle and by the relative use for filling a tyre of a cycle or motorcycle according respectively to claim 1 and 9.

In a further aspect, the invention provides for a kit and a wheel which include such annular modular assembly.

The dependent claims define advantageous embodiments of the invention.

### Brief description of the drawings

Further characteristics and advantages of the invention will be more apparent in light of the detailed description of a preferred but non-exclusive embodiment of the invention, illustrated by way of non-limiting example with reference to the attached drawings, wherein:
FIG. 1 is an axonometric view of a first embodiment of annular modular assembly **1** for filling the tyre of a cycle or motorcycle, wherein the modules 2 are in contact with each other;
**FIGS. 2** and **3** are respectively front and lateral views of the annular modular assembly **1** of FIG. 1;
FIG. **4** is a front view of another embodiment of an annular modular assembly **1** for filling the tyre of a cycle or motorcycle, in which the modules **2** are separated from each other;
**FIGS. 5, 6** and **7** are respectively axonometric, front and lateral views of an embodiment of a module **2;**
FIG. 8 is a front view of another embodiment of a module **2;**
FIG. 9 is a front view of a further embodiment of a module **2.**

### Detailed description of some preferred embodiments

With reference to the attached figures, herein described is an annular modular assembly **1** suitable for filling a tyre of a cycle or motorcycle, for example a mountain bike or a motocross motorcycle.

In a per se known manner, the tyre is mounted on the rim of a wheel of the cycle or motorcycle. Given that it is per se known, the tyre and the rim of the cycle or motorcycle were not shown in the attached drawings.

By way of non-limiting example, the present invention may be particularly useful for cycling or motorcycling sports activity on rough terrain, for example mountain bike or motocross. On the other hand, it is clear that the present invention may be used in any situation wherein the cyclist or motorcyclist deems it appropriate to use it, without particular limitation.

However, by its nature, the use of the present invention is limited to cycling, motorcycling or applications in which the stresses on the tyre are substantially similar. Therefore, it is clear that the present invention cannot be used for filling the tyre of a motor vehicle, a tractor or similar vehicle.

The annular modular assembly **1** consists of a plurality of modules **2** to be removably inserted into the tyre arranged side by side, so as to cover the entire circumferential extension of the tyre.

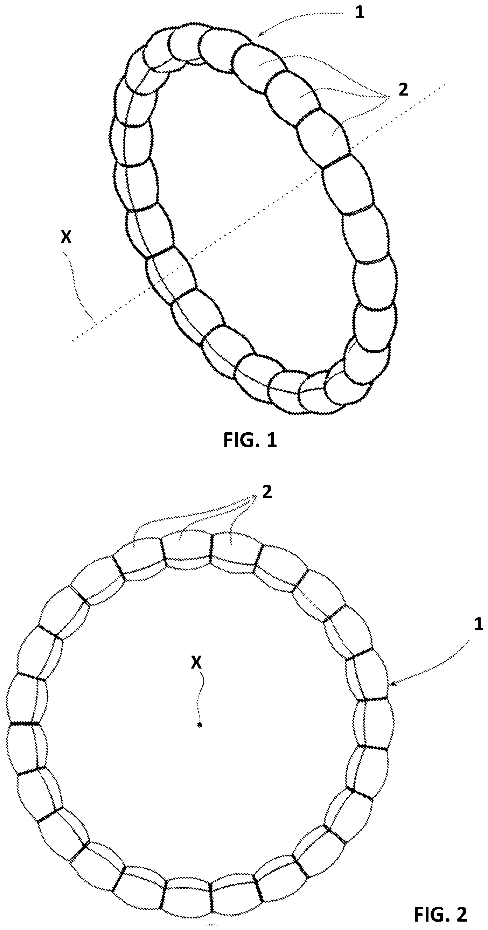

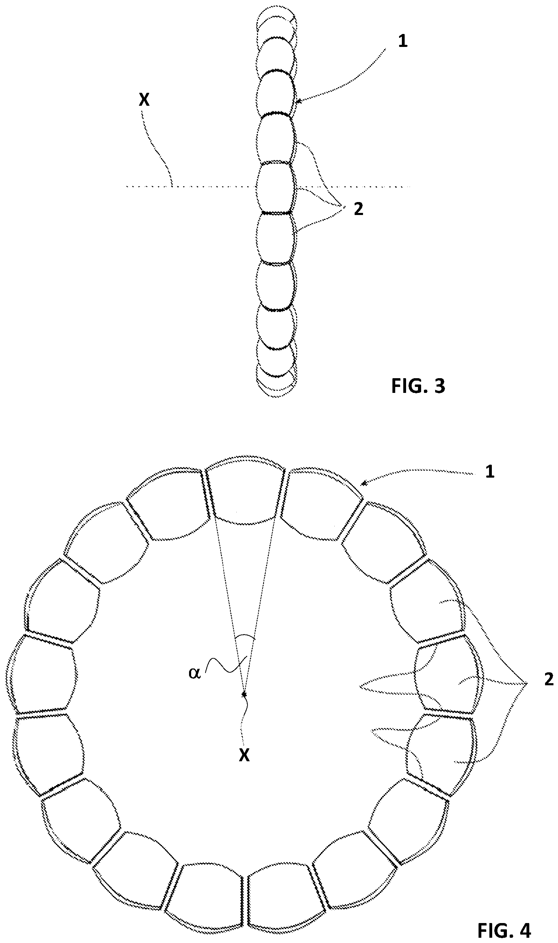

More particularly, once inserted into the tyre, the modules **2** may be in contact with each other, for example as illustrated in FIGS. 1 - 3, or spaced from each other, for example as illustrated in FIG. 4, for example a distance of 1 mm - 10 mm. It is clear that FIG. 4 shows an embodiment of the annular modular assembly **1** which includes a number of modules **2** smaller than that of FIGS. 1-3.

However, even when they are spaced apart, when using the cycle or motorcycle the modules **2** will tend to deform under load, due to the stresses to which they are subjected and the resulting thermal expansion, therefore they can in any case come into mutual contact.

Basically, each module **2** of the annular modular assembly **1** will define a portion or section of the latter and it may consist of a body made of foamed elastomeric material, preferably with closed cells, for example butyl rubber or EVA. As known, the foamed elastomeric material is highly compressible and elastic, so as to absorb impacts and deformations in an optimum manner.

By way of example, the foamed elastomeric material may have a density comprised between 0.05 gr/cm³ and 0.8 gr/cm³, measured according to the ASTM D297 standard, or a density comprised between 0.05 gr/cm³ and 1 gr/cm³, for example measured according to the ISO 845 standard.

A possible composition of the material may be:
- basic elastomer: 30% - 70% by weight;
- black fillers: 10% - 30% by weight;
- white fillers: 0% -10% by weight;
- plasticisers: 2% - 20% by weight;
- foaming agents (chemical and/or physical): 3% - 10% by weight.

All the aforementioned components may be of the type per se known to the person skilled in the art.

For example, the basic elastomer may be IIR, BIIR or CIIR. The black fillers may optionally consist of carbon black, whereas the white ones, which may be reinforcing and non-reinforcing, may for example be silica and/or kaolin.

The modules **2** can be made by vulcanisation, for example with sulphur or peroxide.

The configuration of the modules **2** may be such that once inserted into the tyre, the entire internal volume of the latter may be filled, without any empty spaces.

Although the present description describes modules **2** entirely consisting of a body made of foamed elastomeric material, it is clear that the modules **2** may optionally include a central main body as described above and one or more surface covering layers, for example, one or more anti-friction layers or acting as a barrier against the leakage of gases, without departing from the scope of protection of the attached claims.

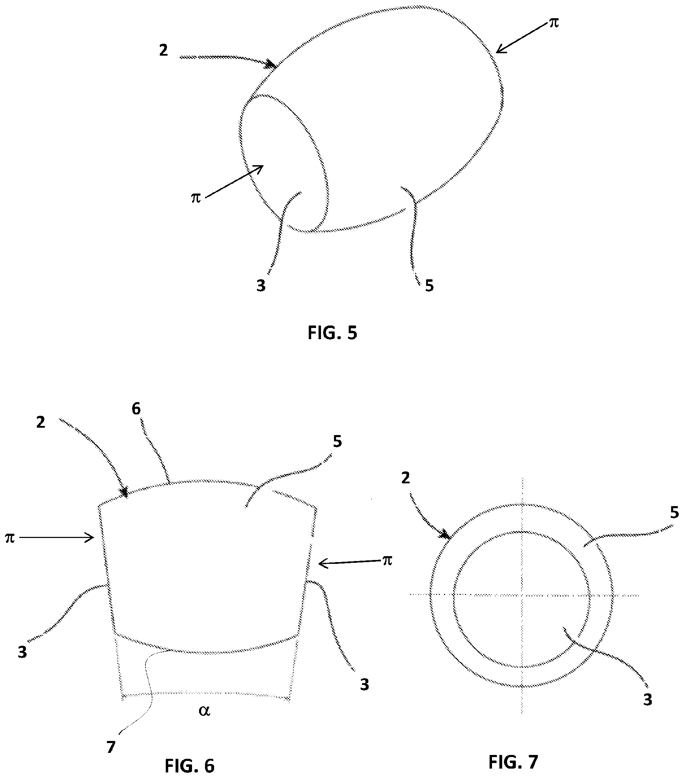

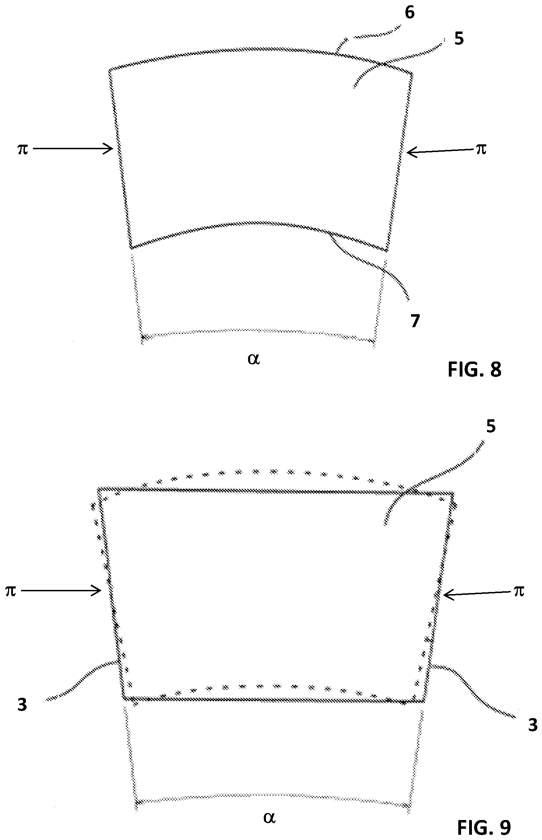

Advantageously, each module **2** may have the circular-section shape, for example as illustrated in FIG. 8, or ellipse-shaped, for example as illustrated in FIGS. 1 - 7, with tapered end areas **3** preferably flat or slightly dome-shaped designed, as mentioned above, to remain facing or in contact with the corresponding tapered end areas **3** of the adjacent modules once inserted into the tyre to form the annular modular assembly **1.**

Advantageously, the end areas 3 may have a circular or elliptical cross-section, so as to optimally adhere to the corresponding end areas of the adjacent modules 2.

Each module 2 may also have a lateral surface 5 interposed between the tapered end areas 3 designed for use to come into contact with the tyre and with the tyre and with the rim of the wheel on which the latter is mounted.

More particularly, the lateral surface **5** may have a first portion **6** designed to come into contact with the inside of the tyre and a second portion **7** designed to come into contact with the rim of the wheel.

On the other hand, for example as illustrated in FIG. 9, the modules **2** may also have an elongated cylindrical or ellipsoidal shape. As a matter fact, thanks to the elasticity of the foamed elastomeric material, they may take the shape of a circular or ellipsoidal section, that is they may take a curved shape, once inserted into the tyre and elastically forced thereinto, as schematically illustrated in FIG. 9 where the solid line indicates the shape that the module **2** takes in the absence of stresses and the dashed line indicates the shape that the module **2** takes when elastically forced into the tyre.

In any case, the tapered end areas **3** may define respective planes **π** incident with respect to each other and angularly spaced by an angle **α** comprised between 8° and 30°, preferably comprised between 10° and 25°, and even more preferably comprised between 12° and 22°.

Thanks to this characteristic, the number of modules **2** for covering the entire circumferential extension of the annular modular assembly **1** may be sufficiently high to allow the user to customise the elastic response of the tyre whenever required.

The number of modules **2** sufficient to cover the entire circumferential extension of the tyre will vary depending on the size of the latter, without prejudice to the angular extension indicated above. Furthermore, the number and size of the modules may vary depending on whether the modules themselves are intended to fill the front or rear wheel.

Furthermore, the compressibility of the foamed elastomeric material allows to insert - into the tyre - a number of modules **2** greater than those required to cover the entire circumferential extension of the annular modular assembly **1.**

This will allow to stiffen the tyre, given that the modules **2** inside the tyre are preloaded.

For this reason, a kit for filling a given tyre may include a packaging and a number of modules **2** greater than those required to cover the entire circumferential extension of the same tyre.

This allows a user to customise the elastic response of the tyre to the maximum, given that the user may insert a number of modules greater than those required to cover the entire circumferential extension of the tyre.

By way of non-limiting example for example if 24 circular-section shaped modules (FIG. 8), 15° each, are required to cover the entire circumferential extension of a front tyre of a motorcycle, the kit may contain 25, 26 or more modules.

By way of example, each module can have a weight of 25 g - 40 g, a length of the external cord measuring 70 mm - 90 mm and a diameter measuring 60 mm - 80 mm.

On the other hand, for example if 20 modules, 18° each are required to cover the entire circumferential extension of a rear tyre of a motorcycle, the kit may contain 21, 22 or more modules.

Still by way of example, each module may have a weight of 60 g - 90 g, an external cord length measuring 80 mm - 100 mm and a diameter measuring 80 mm - 120 mm.

The compressibility of the material may be different for the modules **2** designed for the rear or front wheel.

Given the small size, the modules **2** are very simple to manufacture with respect to the toroidal filling elements of the state of the art, and very simple to fit and remove for the user or operator.

Furthermore, still with respect to the known toroidal filling elements, the modules **2** have a longer life over time and better performance because they tend to overheat less during use thanks to the greater overall surface extension considering the same volume.

Furthermore, with respect to known toroidal filling elements, the present invention is particularly cost-effective in the event of damage or breakage, because in this case it is possible to change the one or more damaged or broken modules and it is not necessary to change the whole filling element.

Suitably, before inserting into the tyre, a lubricating gel, for example of the silicone type, may be applied to the modules **2.** Besides facilitating the operation of insertion into the tyre, this gel increases the heat dissipation of the modules **2** and it acts as a barrier against the leakage of the gases therefrom, increasing the duration thereof over time.

In the light of the above, it is clear that the invention attains the pre-set objectives.

The present invention may include various parts and/or similar or identical elements. Unless otherwise specified, similar or identical parts and/or elements will be indicated by a single reference numeral, it being understood that the technical characteristics described are common to all similar or identical parts and/or elements.

The invention is susceptible of numerous modifications and changes within the scope of the attached claims.

## Claims

1. An annular modular assembly (**1**) suitable to fill a tyre of a cycle or motorcycle consisting of a plurality of identical modules (**2**), the tyre including a carcass and being designed to be mounted on the rim of a wheel, each module (**2**) being removably insertable in the tyre and comprising or consisting of a body made of compressible foamed elastomeric material defining a portion of said annular modular assembly (**1**), the body having tapered end areas (**3**) defining respective planes (**π**) designed - in use - to remain in contact with one of the tapered end areas (**3**) of the adjacent modules and a lateral surface (**5**) interposed between said tapered end areas (**3**) designed - in use - to come into contact with the tyre and with the rim on which the tyre is mounted,
**characterized in that** the number of said modules (**2**) is greater than those required to cover the entire circumferential extension of said annular modular assembly (**1**), so that the modules (**2**) are mutually pre-compressed within the carcass of the tyre; and further
**characterized in that:**
- said body has a curved shape with a circular or ellipsoidal section, said planes (**π**) being mutually incident and angularly spaced with respect to each other by an angle (**α**) comprised between 8° and 30°;
or alternatively
- said body has an elongated cylindrical or ellipsoidal shape designed to conform to the shape of the tyre when the module (**2**) is inserted therein to take the shape of
a circular or ellipsoidal section with said planes (**π**) mutually incident and angularly spaced with respect to each other by an angle (**α**) comprised between 8° and 30°.

2. Annular modular assembly according to claim 1, wherein said angle (**α**) is comprised between 10° and 25°, and preferably comprised between 12° and 22°.

3. Annular modular assembly according to any one of the preceding claims, wherein said tapered end areas (**3**) are substantially flat.

4. Annular modular assembly according to any one of the preceding claims, wherein said foamed elastomeric material is butyl rubber or EVA.

5. Annular modular assembly according to any one of the preceding claims, wherein said foamed elastomeric material is of the closed cell type.

6. Annular modular assembly according to any one of the preceding claims, wherein said foamed elastomeric material has a density comprised between 0.05 g/cm³ to 0.8 g/cm³ measured according to the ASTM D297 standard.

7. Annular modular assembly according to any one of claims 1 to 5, wherein said foamed elastomeric material has a density comprised between 0.05 g/cm³ and 1 g/cm³ measured according to the ISO 845 standard.

8. Annular modular assembly according to any one of the preceding claims, wherein said lateral surface (**5**) has a first portion (**6**) designed to come into contact with the inside of the tyre and a second portion (**7**) designed to come into contact with the rim.

9. The use of the annular modular assembly (**1)** according to one or more of the preceding claims for filling a tyre of a cycle or motorcycle, wherein a number of modules (**2**) is inserted into the tyre greater than those required to cover the entire circumferential extension of said annular modular assembly (**1**), so that the modules (**2**) are mutually pre-compressed within the carcass of the tyre.

10. Use according to claim 9, wherein lubrication means, preferably silicone gel, are applied to each module (**2**) before insertion into the tyre.

11. A kit for filling a tyre of a cycle or motorcycle comprising the annular modular assembly (**1**) according to one or more of claims 1 to 8 and a packaging for the packaging thereof, wherein the number of said modules is greater than those required to cover the entire circumferential extension of said annular modular assembly (**1**), so that the modules (**2**) are mutually pre-compressed within the carcass of the tyre.

12. The kit according to claim 11, further comprising lubricating means which can be applied to the modules.

13. A wheel comprising a rim and a tyre of a cycle or motorcycle, wherein the tyre is filled with an annular modular assembly (**1**) according to any one of claims 1 to 8, the tapered end areas (**3**) of each module (**2**) being in contact with the corresponding tapered end areas (**3**) of the adjacent modules, the lateral surface (**5**) of each module (**2**) having a first portion (**6**) in contact with the inside of the tire and a second portion (**7**) in contact with the rim of the wheel, wherein the number of said modules (**2**) is greater than those required to cover the entire circumferential extension of said annular modular assembly (**1**), so that the modules (**2**) are mutually pre-compressed within the carcass of the tyre.

## Patentansprüche

1. Eine ringförmige modulare Anordnung (1), die zum Füllen eines Reifens eines Fahrrads oder Motorrads geeignet ist und aus einer Vielzahl identischer Module (2) besteht, wobei der Reifen eine Karkasse umfasst und so konstruiert ist, dass er auf der Felge eines Rads montiert werden kann, wobei jedes Modul (2) entfernbar in den Reifen eingesetzt werden kann und einen Körper umfasst oder aus einem Körper besteht, der aus einem komprimierbaren geschäumten Elastomermaterial hergestellt ist, das einen Teil der ringförmigen modularen Anordnung (1) definiert, wobei der Körper verjüngte Endbereiche (3) aufweist, die jeweilige Ebenen (π) definieren, die so ausgelegt sind, dass sie - bei Verwendung - in Kontakt mit einem der verjüngten Endbereiche (3) der angrenzenden Module bleiben, und eine Seitenfläche (5) aufweist, die zwischen den verjüngten Endbereichen (3) angeordnet ist und so ausgelegt ist, dass sie - bei Verwendung - mit dem Reifen und mit der Felge, auf der der Reifen montiert ist, in Kontakt kommt,
**dadurch gekennzeichnet, dass** die Anzahl der Module (2) größer ist als die Anzahl, die erforderlich ist, um die gesamte Umfangserstreckung der ringförmigen modularen Anordnung (1) abzudecken, so dass die Module (2) innerhalb der Karkasse des Reifens gegenseitig vorkomprimiert sind; und ferner
**dadurch gekennzeichnet, dass**:
- der Körper eine gekrümmte Form mit einem kreisförmigen oder ellipsoiden Abschnitt aufweist, wobei die Ebenen (π) gegenseitig einfallend und in einem Winkel (α) von 8° und 30° zueinander beabstandet sind;
oder alternativ
- der Körper eine längliche zylindrische oder ellipsoide Form aufweist, die so gestaltet ist, dass sie sich an die Form des Reifens anpasst, wenn das Modul (2) darin eingesetzt wird, um die Form eines kreisförmigen oder ellipsoiden Abschnitts anzunehmen, wobei die Ebenen (n) gegenseitig einfallend und in einem Winkel (α) zwischen 8° und 30° zueinander beabstandet sind.

2. Ringförmige modulare Anordnung nach Anspruch 1, wobei der Winkel (α) im Bereich zwischen 10° und 25°, und vorzugsweise zwischen 12° und 22° liegt.

3. Ringförmige modulare Anordnung nach einem der vorhergehenden Ansprüche, wobei die sich verjüngenden Endbereiche (3) im Wesentlichen flach sind.

4. Ringförmige modulare Anordnung nach einem der vorhergehenden Ansprüche, wobei das geschäumte Elastomermaterial Butylkautschuk oder EVA ist.

5. Ringförmige modulare Anordnung nach einem der vorhergehenden Ansprüche, wobei das genannte geschäumte elastomere Material vom Typ mit geschlossenen Zellen ist.

6. Ringförmige modulare Anordnung nach einem der vorhergehenden Ansprüche, wobei das geschäumte Elastomermaterial eine Dichte zwischen 0,05 g/cm³ und 0,8 g/cm³ aufweist, gemessen nach der Norm ASTM D297.

7. Ringförmige modulare Anordnung nach einem der Ansprüche 1 bis 5, wobei das geschäumte Elastomermaterial eine Dichte zwischen 0,05 g/cm³ und 1 g/cm³ aufweist, gemessen nach der Norm ISO 845.

8. Ringförmige modulare Anordnung nach einem der vorangehenden Ansprüche, wobei die Seitenfläche (5) einen ersten Abschnitt (6) aufweist, der so ausgelegt ist, dass er mit der Innenseite des Reifens in Kontakt kommt, und einen zweiten Abschnitt (7), der so ausgelegt ist, dass er mit der Felge in Kontakt kommt.

9. Verwendung der ringförmigen modularen Anordnung (1) nach einem oder mehreren der vorhergehenden Ansprüche zum Befüllen eines Reifens eines Fahrrads oder Motorrads, wobei eine Anzahl von Modulen (2) in den Reifen eingesetzt wird, die größer ist als diejenige die für die vollständige Abdeckung der gesamten Umfangserweiterung der ringförmigen modularen Anordnung (1) erforderliche Anzahl, so dass die Module (2) innerhalb der Karkasse des Reifens gegeneinander vorkomprimiert werden.

10. Verwendung nach Anspruch 9, wobei Schmiermittel, vorzugsweise Silikongel, auf jedes Modul (2) vor dem Einsetzen in den Reifen aufgebracht werden.

11. Ein Bausatz zum Befüllen eines Reifens eines Fahrrads oder Motorrads, bestehend aus der ringförmigen modularen Anordnung (1) nach einem oder mehreren der Ansprüche 1 bis 8 und einer Verpackung zum Verpacken derselben, wobei die Anzahl der Module größer ist als die für die vollständige Abdeckung der Umfangserweiterung der ringförmigen modularen Anordnung (1) erforderliche Anzahl, so dass die Module (2) in der Karkasse des Reifens gegeneinander vorkomprimiert werden.

12. Bausatz nach Anspruch 11, weiter umfassend Schmiermittel, welche auf die Module aufgebracht werden können.

13. Ein Rad bestehend aus einer Felge und einem Reifen eines Fahrrads oder Motorrads,
wobei der Reifen mit einer ringförmigen modularen Anordnung (1) nach einem der Ansprüche 1 bis 8 befüllt ist, wobei die sich verjüngenden Endbereiche (3) jedes Moduls (2) mit den entsprechenden sich verjüngenden Endbereichen (3) der benachbarten Module in Kontakt sind, wobei die Seitenfläche (5) jedes Moduls (2) einen ersten Abschnitt (6) in Kontakt mit der Innenseite des Reifens und einen zweiten Abschnitt (7) in Kontakt mit der Felge des Rades aufweist, wobei die Anzahl der Module (2) größer ist als die Anzahl, die erforderlich ist, um die gesamte Umfangserstreckung der ringförmigen modularen Anordnung (1) abzudecken, so dass die Module (2) innerhalb der Karkasse des Reifens gegenseitig vorkomprimiert sind.

## Revendications

1. Un ensemble modulaire annulaire (1) adapté pour remplir un pneu d'une bicyclette ou d'une motocyclette comprenant une pluralité de modules identiques (2), le pneu comprenant une carcasse et étant adapté pour être monté sur la jante d'une roue, chaque module (2) étant adapté pour être inséré de manière amovible dans le pneu et comprenant ou consistant en un corps dans un matériau élastomère expansé compressible définissant une portion dudit ensemble modulaire annulaire (1), le corps comprenant des zones d'extrémité effilées (3) définissant des plans (π) respectifs conçus, pendant l'utilisation, pour rester en contact avec une des zones d'extrémité effilées (3) des modules adjacents et une surface latérale (5) interposée entre lesdites zones d'extrémité effilées (3) conçue, pendant l'utilisation, pour entrer en contact avec le pneu et avec la jante sur laquelle le pneu est monté,
**caractérisé en ce que** le nombre desdits modules (2) est supérieur à ceux requis pour couvrir la totalité de l'extension circonférentielle dudit ensemble modulaire annulaire (1), de sorte que les modules (2) sont mutuellement pré-compressés à l'intérieur de la carcasse du pneu ; et en outre
**caractérisé en ce que** :
- ledit corps a une forme incurvée avec une section circulaire ou ellipsoïdale, lesdits plans (π) étant mutuellement incidents et espacés de manière angulaire les uns par rapport aux autres d'un angle (α) compris entre 8° et 30° ;
ou alternativement
- ledit corps a une forme allongée cylindrique ou ellipsoïdale adaptée pour se conformer à la forme du pneu lorsque le module (2) est inséré dans celui-ci pour prendre la forme d'une section circulaire ou ellipsoïdale avec lesdits plans (π) mutuellement incidents et espacés de manière angulaire les uns par rapport aux autres d'un angle (α) compris entre 8° et 30°.

2. Ensemble modulaire annulaire selon la revendication 1, dans lequel ledit angle (α) est compris entre 10° et 25°, et de préférence compris entre 12° et 22°.

3. Ensemble modulaire annulaire selon l'une quelconque des revendications précédentes, dans lequel lesdites zones d'extrémité effilées (3) sont sensiblement plates.

4. Ensemble modulaire annulaire selon l'une quelconque des revendications précédentes, dans lequel ledit matériau élastomère expansé est du caoutchouc butyle ou EVA.

5. Ensemble modulaire annulaire selon l'une quelconque des revendications précédentes, dans lequel ledit matériau élastomère expansé est du type de cellule fermée.

6. Ensemble modulaire annulaire selon l'une quelconque des revendications précédentes, dans lequel ledit matériau élastomère expansé a une densité comprise entre 0,05 g/cm³ et 0,8 g/cm³ mesurée selon la norme ASTM D297.

7. Ensemble modulaire annulaire selon l'une quelconque des revendications 1 à 5, dans lequel ledit matériau élastomère expansé a une densité comprise entre 0,05 g/cm³ et 1 g/cm³ mesurée selon la norme ISO 845.

8. Ensemble modulaire annulaire selon l'une quelconque des revendications précédentes, dans lequel ladite surface latérale (5) a une première portion (6) configurée pour entrer en contact avec l'intérieur du pneu et une deuxième portion (7) configurée pour entrer en contact avec la jante.

9. L'utilisation de l'ensemble modulaire annulaire (1) selon une ou plusieurs des revendications précédentes pour remplir un pneu d'une bicyclette ou d'une motocyclette, dans lequel un nombre de modules (2) est inséré dans le pneu supérieur à ceux requis pour couvrir la totalité de l'extension circonférentielle dudit ensemble modulaire annulaire (1), de sorte que les modules (2) sont mutuellement pré-compressés à l'intérieur de la carcasse du pneu.

10. Utilisation selon la revendication 9, dans lequel des moyens de lubrification, de préférence du gel de silicone, sont appliqués sur chaque module (2) avant insertion dans le pneu.

11. Un kit pour le remplissage d'un pneu d'une bicyclette ou d'une motocyclette comprenant l'ensemble modulaire annulaire (1) selon une ou plusieurs des revendications 1 à 8 et un emballage pour l'emballage de celui-ci, dans lequel le nombre desdits modules est supérieur à ceux requis pour couvrir la totalité de l'extension circonférentielle dudit ensemble modulaire annulaire (1), de sorte que les modules (2) sont mutuellement pré-compressés à l'intérieur de la carcasse du pneu.

12. Le kit selon la revendication 11, comprenant en outre des moyens de lubrification qui peuvent être appliqués sur les modules.

13. Une roue comprenant une jante et un pneu d'une bicyclette ou d'une motocyclette, dans laquelle le pneu est rempli d'un ensemble modulaire annulaire (1) selon l'une quelconque des revendications 1 à 8, les zones d'extrémité effilées (3) de chaque module (2) étant en contact avec les zones d'extrémité effilées (3) correspondantes des modules adjacents, la surface latérale (5) de chaque module (2) ayant une première portion (6) en contact avec l'intérieur du pneu et une deuxième portion (7) en contact avec la jante du pneu, dans lequel le nombre desdits modules (2) est supérieur à ceux requis pour couvrir la totalité de l'extension circonférentielle dudit ensemble modulaire annulaire (1), de sorte que les modules (2) sont mutuellement pré-compressés à l'intérieur de la carcasse du pneu.
